# EUROPEAN PATENT APPLICATION

(11) **EP 4 797 242 A1**
(43) Date of publication of application: **26.08.2026**
(21) Application number: 26154955.4
(22) Date of filing: 29.01.2026
(51) Int. Cl.: G09B 5/12, G06Q 50/20, G09B 5/06, G06Q 10/109, G06F 3/048

(54) **LEARNING SUPPORT SYSTEM, LEARNING SUPPORT METHOD, AND PROGRAM**

(30) Priority: 20.02.2025 JP 2025025798
(71) Applicant: Casio Computer Co., Ltd., Tokyo 151-8543 (JP)
(72) Inventor: Sumioka, Daiki, Hamura-shi, Tokyo, 205-8555 (JP)
(74) Representative: Grünecker Patent- und Rechtsanwälte PartG mbB

(57) **Abstract**

A learning support system (1) is capable of arranging and displaying a plurality of electronic sticky notes (101a to 101d). The learning support system (1) includes a control means (11, 21) that: in response to an electronic sticky note being selected from the plurality of electronic sticky notes (101a to 101d), displays on a display (24) an edit screen (200) for editing content shown in the selected electronic sticky note; and, in response to a user operation on a predetermined icon (206), allocates a portion of the edit screen (200) as a region (207) for displaying a search screen (207A) for searching for a certain character string in predetermined dictionary content to display the search screen (207A). The predetermined icon (206) is displayed at a predetermined position on the edit screen (200) as an indicator showing that searching for the certain character string in the predetermined dictionary content is possible.

## Description

### BACKGROUND OF THE INVENTION

### TECHNICAL FIELD

The present disclosure relates to a learning support system, a learning support method, and a program.

### DESCRIPTION OF RELATED ART

JP 2001-5583A and JP 2022-117378A describe systems capable of displaying a plurality of electronic sticky notes.

### SUMMARY OF THE INVENTION

When a user wants to search for a certain character string in an electronic dictionary (dictionary content) while editing the content shown in an electronic sticky note on an edit screen for editing the sticky note, the user needs to close the edit screen, open a search screen for using a dictionary search function, and then search for the character string on the search screen.

An object of the present disclosure is to enhance the convenience of the dictionary search function during the editing of electronic sticky notes.

To achieve at least one of the above objects, a learning support system (1) according to the present disclosure is capable of arranging and displaying a plurality of electronic sticky notes (101a to 101d) and is characterized in that the learning support system (1) comprises a control means (11, 21) that: in response to an electronic sticky note being selected from the plurality of electronic sticky notes (101a to 101d), displays on a display (24) an edit screen (200) for editing content shown in the selected electronic sticky note; and, in response to a user operation on a predetermined icon (206), allocates a portion of the edit screen (200) as a region (207) for displaying a search screen (207A) for searching for a certain character string in predetermined dictionary content to display the search screen (207A), wherein the predetermined icon (206) is displayed at a predetermined position on the edit screen (200) as an indicator showing that searching for the certain character string in the predetermined dictionary content is possible.

According to the present disclosure, the convenience of the dictionary search function during the editing of electronic sticky notes can be enhanced.

### BRIEF DESCRIPTION OF DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG. 1 is a block diagram illustrating a learning support system according to an embodiment;
FIG. 2 is a block diagram illustrating a functional configuration of a server;
FIG. 3 is a diagram illustrating a notebook screen;
FIG. 4 is a block diagram illustrating a functional configuration of a terminal device;
FIG. 5 is a diagram illustrating a menu screen;
FIG. 6 is a diagram illustrating a dictionary content screen;
FIG. 7 is a diagram illustrating a notebook selection screen;
FIG. 8 is a diagram illustrating a notebook screen with an operation menu displayed;
FIG. 9 is a diagram illustrating an edit screen;
FIG. 10 is a diagram illustrating an edit screen with a search screen displayed;
FIG. 11 is a diagram illustrating an edit screen with a search screen containing a list of headwords displayed;
FIG. 12 is a diagram illustrating an edit screen with a search screen containing explanatory information displayed;
FIG. 13 is a diagram illustrating an edit screen with a search screen containing a selected character string displayed;
FIG. 14 is a diagram illustrating an edit screen with a search screen containing a list of headwords displayed;
FIG. 15 is a diagram illustrating a word registration screen;
FIG. 16 is a diagram illustrating an edit screen with a search screen displayed;
FIG. 17 is a diagram illustrating an edit screen with a search screen displayed;
FIG. 18 is a diagram illustrating an edit screen with an expanded search screen displayed;
FIG. 19 is a diagram illustrating an edit screen with a software keyboard and a search screen displayed;
FIG. 20 is a diagram illustrating an edit screen with a sticky note displayed in a reduced size;
FIG. 21 is a diagram illustrating a restriction setting screen; and
FIG. 22 is a diagram illustrating an edit screen when an instruction for a search process via a dictionary icon is disabled.

### DETAILED DESCRIPTION

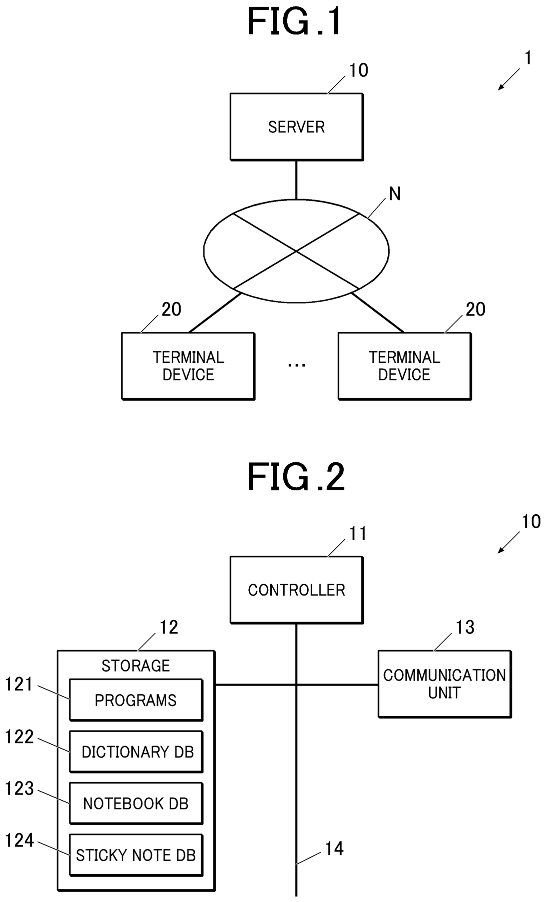

Hereinafter, one or more embodiments of the present disclosure will be described in detail with reference to the accompanying drawings. The embodiments described below are provided with various limitations technically preferable for carrying out the present disclosure. However, the scope of the present disclosure is not limited to the following embodiments or illustrated examples. As illustrated in FIG. 1, a learning support system 1 includes a server 10 and terminal devices 20. The server 10 and the terminal devices 20 are communicatively connected to each other via a communication network N. The communication network N is, for example, any communication network such as the Internet, a wireless local area network (LAN), a wired LAN, a mobile communication network, a short-distance wireless communication network, or a combination of some or all of these. The number of terminal devices 20 is not particularly limited. The learning support system 1 provides a learning support service to students at an educational institution. The learning support service includes class support such as creating notebooks for classes, online dictionaries, math tools, and conducting and submitting assignments from teachers. The learning support service is provided to users whose account information (user ID and password) has been pre-registered on the server 10.

The server 10 provides the learning support service via the web in response to access from the terminal devices 20, stores information input in the learning support service in a storage 12 (see FIG. 2) in association with the user ID, and reads information stored in the storage 12 to transmit the read information to the terminal devices 20. The server 10 includes a controller (control means) 11, the storage 12, and a communication unit 13, as illustrated in FIG. 2. These components are interconnected via a system bus 14. The controller 11 includes a central processing unit (CPU), a random-access memory (RAM), and the like. The CPU of the controller 11 is a processor that controls the operation of each component of the server 10 by reading programs 121 stored in the storage 12 into the RAM, executing the programs 121, and performing various arithmetic processes. The communication unit 13 performs communication operations according to predetermined communication standards. The communication unit 13 performs data transmission and reception with the terminal devices 20 via the communication network N through these communication operations.

The storage 12 is a non-transitory recording medium readable by the CPU of the controller 11. The storage 12 stores the programs 121 and various data. The storage 12 includes a nonvolatile memory such as a hard disk drive (HDD) or a solid-state drive (SSD). The programs 121 include a program to be executed on a web browser (hereinafter referred to as the browser) launched on one of the terminal devices 20 to provide the learning support service. The browser is software that connects to a web server to receive and display website data. Furthermore, a dictionary database (DB) 122 is stored in the storage 12. The dictionary DB 122 stores dictionary content available to the users in the learning support service. In the dictionary content, explanatory information describing each headword is associated with that headword. The dictionary DB 122 of the present embodiment stores the dictionary content pertaining to multiple types of dictionaries. The type of dictionary is not particularly limited as long as the dictionary is in a format where the explanatory information is associated with the headwords. Examples of the type of dictionary include language dictionaries such as English dictionaries and English-Japanese dictionaries, encyclopedias, and terminology dictionaries for various fields such as physics and chemistry. Furthermore, in association with each dictionary in the dictionary content, the dictionary DB 122 stores information such as the dictionary name and a thumbnail image of the dictionary. The dictionary name is the name of an electronic dictionary. The thumbnail image of a dictionary is image data of a thumbnail image such as the front cover of the dictionary.

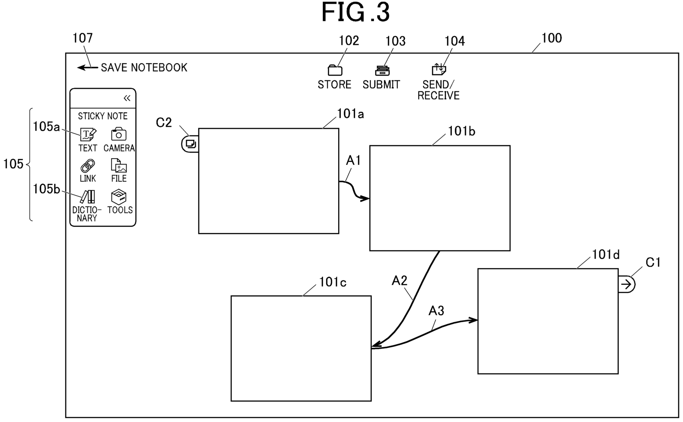

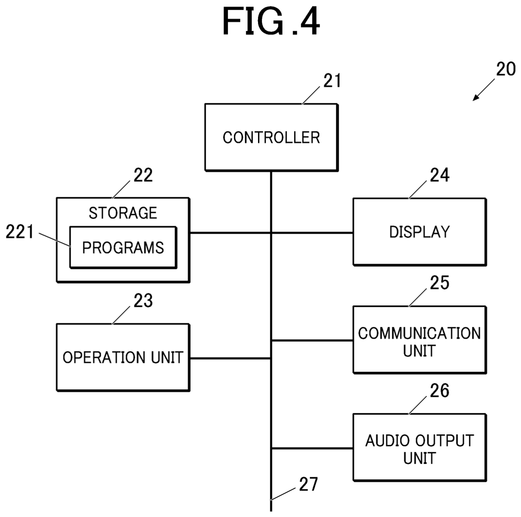

Furthermore, a notebook DB 123 is stored in the storage 12. The notebook DB 123 stores notebook management information, which is to manage information related to notebooks created by the users in the learning support service, in association with the users' user IDs. Each of the users can create sticky notes (electronic sticky notes) in the learning support service and place the created sticky notes within notebooks. FIG. 3 illustrates a notebook screen 100 displaying a notebook, with sticky notes 101a to 101d placed on the notebook. The notebook is a notebook-style web component (digital component) that serves as a display element shown on a display 24 of the terminal device 20 (see FIG. 4). Each of the sticky notes is a web component that records learning items in various expressions. Here, an example in which the sticky note shape is substantially rectangular is described, but the present invention is not limited thereto. It is assumed that the shape and size of sticky notes are such that the sticky notes can be placed on a notebook. The user can move any of the sticky notes placed on the notebook to any position within the notebook via an operation unit 23 (see FIG. 4).

Furthermore, the sticky notes may be connected to each other by directed connection lines. In the example illustrated in FIG. 3, the sticky note 101a and the sticky note 101b are displayed while connected by a connection line A1, with the sticky note 101a as the starting point (connection origin) and the sticky note 101b as the end point (connection destination). The sticky note 101b and the sticky note 101c are displayed while connected by a connection line A2, with the sticky note 101b as the starting point (connection origin) and the sticky note 101c as the end point (connection destination). The sticky note 101c and the sticky note 101d are displayed while connected by a connection line A3, with the sticky note 101c as the starting point (connection origin) and the sticky note 101d as the end point (connection destination). In the present embodiment, the connection lines are arrows, but they are not limited to arrows as long as the connection lines contain directional information. A plurality of sticky notes connected by connection lines has an order (sequence) based on the directions of the connection lines. The order of the plurality of connected sticky notes corresponds to, for example, the display order in a slideshow function that sequentially displays the sticky notes at set time intervals, or the order of the learning schedule of the sticky notes. In the example illustrated in FIG. 3, the order of the sticky notes 101a to 101d is, from the first, the sticky note 101a, sticky note 101b, sticky note 101c, and sticky note 101d. In the present embodiment, the connection lines are not branched. That is, the connection lines connect from one sticky note to another single sticky note and do not connect from one sticky note to a plurality of sticky notes. In the example illustrated in FIG. 3, a connection mark C1 attached to the sticky note 101d is an instruction means for instructing that the sticky notes are to be connected to each other. When the user drags and drops the connection mark C1 from a predetermined first sticky note to a predetermined second sticky note, the controller 11 connects the first sticky note and the second sticky note to each other with a connection line, with the first sticky note as the connection origin and the second sticky note as the connection destination. In the example illustrated in FIG. 3, a connected mark C2 attached to the sticky note 101a indicates that the sticky note 101a is connected to another sticky note and that the sticky note 101a is the first sticky note. The notebook management information includes identification information for the target notebook, the notebook name, a thumbnail image of the notebook, identification information for sticky notes placed within the notebook, coordinate information for the sticky notes within the notebook, identification information for sticky notes that are the connection origin and/or the connection destination of other sticky notes, and the like in association with each other.

Additionally, a sticky note DB 124 is stored in the storage 12. The sticky note DB 124 stores sticky note management information, which is to manage information related to sticky notes created by the users in the learning support service. The sticky note management information includes information such as identification information for the target sticky note, the sticky note type, and the sticky note content. The sticky note type indicates the type corresponding to the sticky note, such as text sticky note, camera sticky note, link sticky note, file sticky note, dictionary sticky note, or tool sticky note. The sticky note content indicates the content of the sticky note, providing information that allows the content to be identified as character strings, images, videos, and/or the like. Furthermore, the sticky note content includes information regarding display settings such as the display position, display size, display angle, and background color of the sticky note.

Each of the terminal devices 20 is an information processing device used by a user such as a teacher and a student at the educational institution, for example, a notebook PC. However, the terminal device 20 is not limited to a notebook PC and may also be any other information processing device such as a desktop PC, tablet PC, or smartphone. As illustrated in FIG. 4, the terminal device 20 includes a controller (control means) 21, a storage 22, an operation unit 23, a display 24, a communication unit 25, and an audio output unit 26. These components are interconnected via a system bus 27. The controller 21 includes a CPU, a RAM, and the like. The CPU of the controller 21 is a processor that controls the operation of each component of the terminal device 20 by reading programs 221 stored in the storage 22 into the RAM, executing the programs 221, and performing various arithmetic processes. The storage 22 is a non-transitory recording medium readable by the CPU of the controller 21. The storage 22 stores the programs 221 and various data. The storage 22 includes, for example, a nonvolatile memory such as an HDD or an SSD. The programs 221 stored in the storage 22 include a web browser and the like.

The operation unit 23 includes a keyboard with various keys and a pointing device that receives position input. The operation unit 23 receives a user operation for key input and position input and outputs that operation information to the controller 21. Here, the operation unit 23 is assumed to have a mouse as the pointing device. The operation unit 23 may also include a touch panel integrally formed on a display panel of the display 24, configured to receive touch input from the user. The display 24 includes a liquid crystal display (LCD) or an electroluminescent (EL) display. The display 24 performs various displays according to display information instructed by the controller 21. The communication unit 25 performs communication operations according to predetermined communication standards. The communication unit 25 performs data transmission and reception with the server 10 via the communication network N through these communication operations. The audio output unit 26 includes an amplifier, a speaker, and the like and outputs audio based on audio data input from the controller 21.

Next, the operation of the learning support system 1 will be described. First, a process executed by the controller 11 of the server 10 when a user logs into a learning support service website via the terminal device 20 will be described. When a user logs into the learning support service website via the terminal device 20, the controller 11 of the server 10 provides the learning support service to the terminal device 20 in cooperation with the programs 121 stored in the storage 12. The learning support service provides the terminal device 20 with a plurality of learning functions, such as an electronic dictionary function and a notebook function.

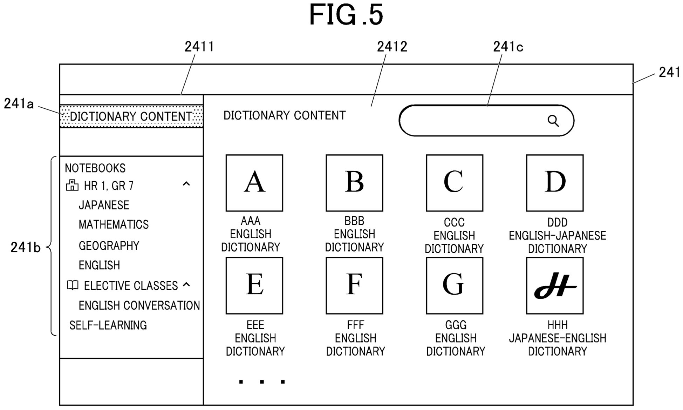

When the user logs into the learning support service website via the terminal device 20, the controller 11 of the server 10 generates image information to display a menu screen 241 (see FIG. 5) via the browser, allowing the user to select a learning function to use. The controller 11 then transmits the generated image information to the terminal device 20. Thus, the controller 11 causes the display 24 of the terminal device 20 to display the menu screen 241. As illustrated in FIG. 5, the menu screen 241 includes a region 2411 and a region 2412. The region 2411 displays a selection field for the user to select a learning function to use. For example, the selection field displays a dictionary content selection field 241a and a notebook selection field 241b. The dictionary content selection field 241a is for selecting the electronic dictionary function as the learning function to use. The notebook selection field 241b is for selecting the notebook function as the learning function to use. The notebook selection field 241b displays a selection field for selecting a class or self-learning in which notebooks are utilized.

The region 2412 displays a user interface (UI) for using the learning function selected in the region 2411. In the present embodiment, the electronic dictionary function has been selected by default, and the region 2412 displays a list of the dictionary content available to the user. The controller 11 reads the names and thumbnail images in the dictionary content stored in the dictionary DB 122 and displays the read names and thumbnail images as the list of the dictionary content. The following describes the operation of the learning support system 1 when the user utilizes the electronic dictionary function. An input field 241c is provided in the region 2412. The controller 11 receives a user input for a certain character string in the input field 241c via the operation unit 23 of the terminal device 20. Next, the controller 11 executes a search process to search for the headword corresponding to the input character string in the dictionary content to be searched. The dictionary content to be searched is stored in the dictionary DB 122 and available to the logged-in account, which is the account that has been authenticated for login. When there is a plurality of dictionaries in the dictionary content to be searched, the controller 11 simultaneously searches (batch searches) for the headwords corresponding to the character string for which the search process has been instructed across all the plurality of dictionaries in the dictionary content. In the search process, the controller 11 acquires the headword(s) corresponding to the character string for which the search process has been instructed and the explanatory information corresponding to the headword(s) from the dictionary content to be searched.

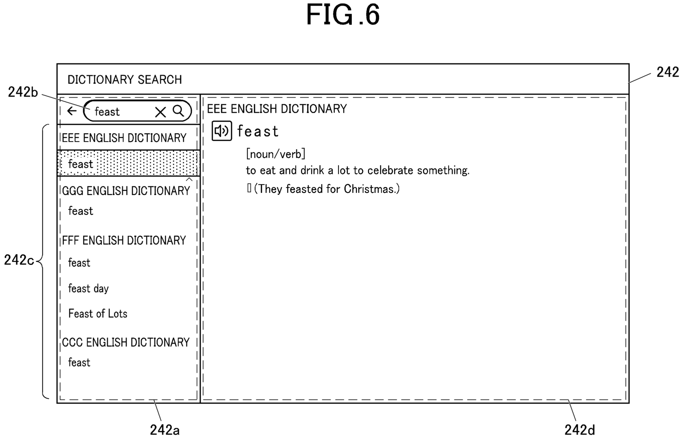

Next, the controller 11 generates image information for the browser to display a dictionary content screen 242 (see FIG. 6) and transmits the generated image information to the terminal device 20. Thus, the controller 11 causes the display 24 of the terminal device 20 to display the dictionary content screen 242, with the results of the search process displayed on the dictionary content screen 242. As illustrated in FIG. 6, the dictionary content screen 242 includes a search region 242a and a content region 242d. The controller 11 displays the character string for which the search process has been instructed in an input field 242b within the search region 242a. The controller 11 displays the headwords acquired in the search process from the respective dictionaries in the dictionary content to be searched in a list field 242c within the search region 242a, associating the headwords with the respective dictionary names. The controller 11 receives a user operation via the operation unit 23 of the terminal device 20 for selecting one of the headwords in the list of headwords displayed in the list field 242c. The controller 11 then acquires the explanatory information corresponding to the headword selected by the user from the dictionary content and displays the acquired explanatory information in the content region 242d. When no headword has been selected by the user from the list of headwords, the controller 11 may acquire the explanatory information corresponding to the topmost headword in the list of headwords displayed in the list field 242c from the dictionary content and display the acquired explanatory information in the content region 242d.

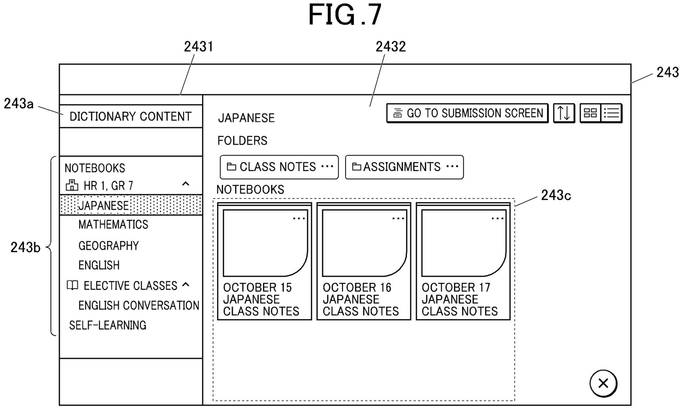

Next, the operation of the learning support system 1 when the user utilizes the notebook function will be described. The controller 11 receives a user operation for selecting a class or self-learning item from the notebook selection field 241b via the operation unit 23 of the terminal device 20. Next, the controller 11 generates image information for the browser to display a notebook selection screen 243 (see FIG. 7) and transmits the generated image information to the terminal device 20. Thus, the controller 11 causes the display 24 of the terminal device 20 to display the notebook selection screen 243. As illustrated in FIG. 7, the notebook selection screen 243 includes a region 2431 and a region 2432. The region 2431 is the same as the region 2411 and displays a dictionary content selection field 243a and a notebook selection field 243b. The region 2432 displays a notebook list 243c for the selected class or self-learning. The controller 11 reads the names and thumbnail images of the notebooks stored in the notebook DB 123 and associated with the user ID of the logged-in account and displays the read names and thumbnail images as the notebook list 243c. The controller 11 receives a user operation for selecting one of the notebooks displayed in the notebook list 243c via the operation unit 23 of the terminal device 20. Subsequently, the controller 11 generates screen information for a notebook screen 100 that displays the notebook selected by the user. Then, the controller 11 transmits the generated screen information to the terminal device 20. Thus, the controller 11 causes the display 24 of the terminal device 20 to display the notebook screen 100. The notebook screen 100 is for the user to utilize the notebook function and a sticky note function.

As illustrated in FIG. 3, the notebook screen 100 includes a store icon 102, a submit icon 103, a send/receive icon 104, a button group 105, a notebook close button 107, and others. When the notebook screen 100 for a new notebook is displayed, no sticky notes are initially shown on the notebook screen 100. The store icon 102 is for storing a sticky note placed within the notebook screen 100 into a predetermined folder when the sticky note is dragged and dropped onto the store icon 102 by the user. The submit icon 103 is for submitting a sticky note placed within the notebook screen 100 to a predetermined submission destination when the sticky note is dragged and dropped onto the submit icon 103 by the user. The send/receive icon 104 is for sending a sticky note placed within the notebook screen 100 to another user's account when the sticky note is dragged and dropped onto the send/receive icon 104 by the user. Furthermore, the send/receive icon 104 is for receiving sticky notes sent from other users' accounts when clicked by the user. The button group 105 includes a plurality of buttons that receives instructions such as a start instruction for transitioning to a process of creating a sticky note to be placed on the notebook screen 100. The button group 105 includes a text button 105a, a dictionary button 105b, and the like. The text button 105a is for transitioning to a screen for creating a text sticky note that shows a text input by the user via the operation unit 23. The dictionary button 105b is for transitioning to a screen for creating a dictionary sticky note that shows the headword and the corresponding explanatory information for that headword in the dictionary content stored in the dictionary DB 122. The notebook close button 107 is for giving an instruction to close the notebook screen 100.

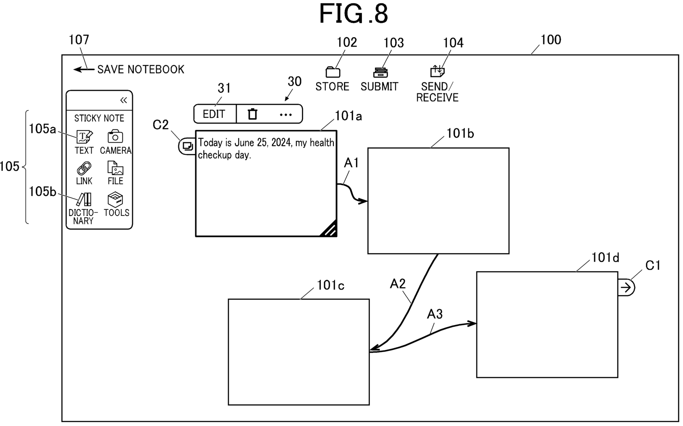

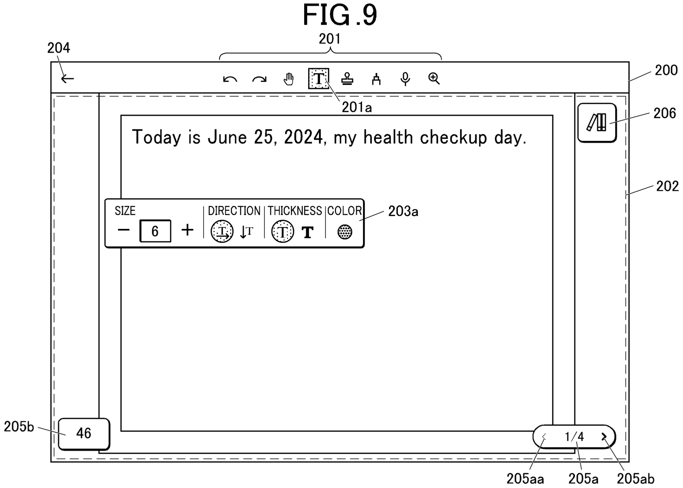

When the controller 11 receives a click input from the user on a text sticky note placed within the notebook screen 100 via the operation unit 23 of the terminal device 20, the controller 11 displays an operation menu 30 near (e.g., above) the clicked text sticky note (e.g., sticky note 101a), as illustrated in FIG. 8. The operation menu 30 includes an edit button 31. The edit button 31 is for transitioning to an edit screen for editing information shown in the text sticky note that has been clicked. When the controller 11 receives a click input from the user on the edit button 31 corresponding to the text sticky note via the operation unit 23 of the terminal device 20, the controller 11 generates image information for displaying an edit screen 200 (see FIG. 9) via the browser and transmits the generated image information to the terminal device 20. Thus, the controller 11 causes the display 24 of the terminal device 20 to display the edit screen 200. The edit screen 200 is for editing the information shown in the text sticky note.

As illustrated in FIG. 9, the edit screen 200 includes an icon group 201 and an editing region 202. The icon group 201 includes a text input icon 201a. The text input icon 201a is for receiving an input of text to be shown in the sticky note displayed in the editing region 202. When the controller 11 receives a click input from the user on the text input icon 201a via the operation unit 23 of the terminal device 20, the controller 11 displays a text input menu 203a on the edit screen 200 and receives setting operations from the user regarding text input. Specifically, the controller 11 can receive setting operations in the text input menu 203a for the size, direction, thickness, and color of the text shown in the sticky note. When the controller 11 receives inputs of characters from the user via the operation unit 23 of the terminal device 20, the controller 11 begins showing the input characters in the sticky note (the editing target) displayed in the editing region 202 as the characters are input.

Furthermore, as illustrated in FIG. 9, the edit screen 200 includes an edit end button 204. The edit end button 204 is for giving an instruction to end the editing of the information shown in the sticky note on the edit screen 200. When the controller 11 receives a click input from the user on the edit end button 204 via the operation unit 23 of the terminal device 20, the controller 11 stores the edited information on the edit screen 200 in the sticky note DB 124 and closes the edit screen 200 to transition the display to the notebook screen 100. Furthermore, when a sticky note displayed on the edit screen 200 is connected to another sticky note, a pager 205a is displayed in the editing region 202, as illustrated in FIG. 9. The pager 205a displays the number of connected sticky notes and the position of the sticky note displayed on the edit screen 200 in the sequence of connected sticky notes. The pager 205a includes a previous sticky note button 205aa for transitioning to the previous sticky note in the sequence of connected sticky notes, and a next sticky note button 205ab for transitioning to the next sticky note in the sequence of connected sticky notes. Note that when the sticky note displayed on the edit screen 200 is not connected to another sticky note, the pager 205a is not displayed. Furthermore, as illustrated in FIG. 9, a character count indicator 205b is displayed in the editing region 202. The character count indicator 205b indicates the number of characters entered by the user in the sticky note displayed on the edit screen 200.

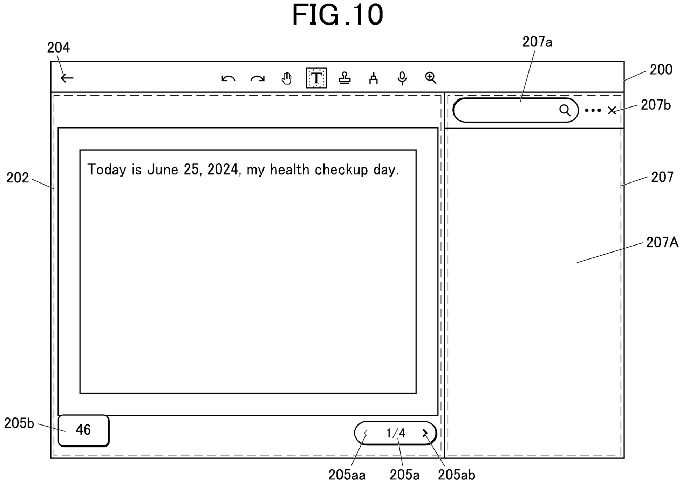

Furthermore, as illustrated in FIG. 9, a dictionary icon 206 is displayed in the editing region 202. The dictionary icon 206 is for receiving an instruction to search for a certain character string entered by the user to display the search results for that character string. When the controller 11 receives a click input from the user on the dictionary icon 206 via the operation unit 23 of the terminal device 20, as illustrated in FIG. 10, the controller 11 reduces the size of the editing region 202 within the edit screen 200 to allocate a portion of the edit screen 200 to a search region 207 for displaying a search screen 207A. Here, the search region 207 is allocated to be arranged side-by-side in the left-right direction with respect to the editing region 202. Furthermore, the search region 207 is allocated such that the area allocated to the editing region 202 is larger than the area allocated to the search region 207. Moreover, the controller 11 displays the pager 205a in the lower right corner of the editing region 202 so that the pager 205a does not overlap with the search region 207. The search screen 207A includes an input field 207a and a search end button 207b. The input field 207a is for inputting a character string to be searched for in the dictionary content. The search end button 207b is for giving an instruction to close the search screen 207A. When the controller 11 receives a click input from the user on the search end button 207b via the operation unit 23 of the terminal device 20, the controller 11 closes the search screen 207A and returns the edit screen 200 to the state illustrated in FIG. 9. In other words, the dictionary icon 206 is displayed at a predetermined position within the edit screen 200 as an indicator showing that an input character string can be searched for in predetermined dictionary content.

The controller 11 receives a user input for a certain character string in the input field 207a via the operation unit 23 of the terminal device 20. Next, the controller 11 executes a search process to search for the headword corresponding to the input character string in the dictionary content to be searched. The dictionary content to be searched is stored in the dictionary DB 122 and available to the logged-in account. When there is a plurality of dictionaries in the dictionary content to be searched, the controller 11 simultaneously searches (batch searches) for the headwords corresponding to the character string for which the search process has been instructed across all the plurality of dictionaries in the dictionary content. In the search process, the controller 11 acquires the headword(s) corresponding to the character string for which the search process has been instructed and the explanatory information corresponding to the headword(s) from the dictionary content to be searched.

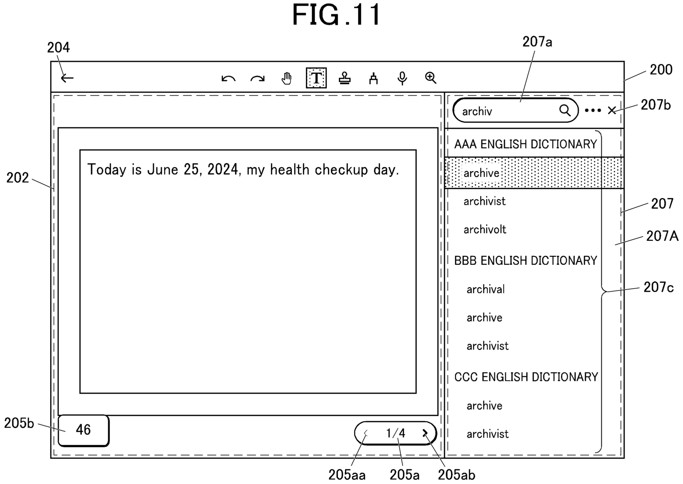

Next, as illustrated in FIG. 11, the controller 11 displays the headwords acquired in the search process from the respective dictionaries in the dictionary content to be searched in a list field 207c on the search screen 207A, associating the headwords with the respective dictionary names. Furthermore, when the list field 207c is displayed on the search screen 207A illustrated in FIG. 11 and the controller 11 receives a click input from the user on the search end button 207b via the operation unit 23 of the terminal device 20, the controller 11 closes the search screen 207A and returns the edit screen 200 to the state illustrated in FIG. 9. Thereafter, when the controller 11 receives another click input from the user on the dictionary icon 206 on the edit screen 200 via the operation unit 23 of the terminal device 20, as illustrated in FIG. 11, the controller 11 allocates the portion of the edit screen 200 to the search region 207 and displays again, on the search screen 207A, the list field 207c that has been displayed before closing the search screen 207A.

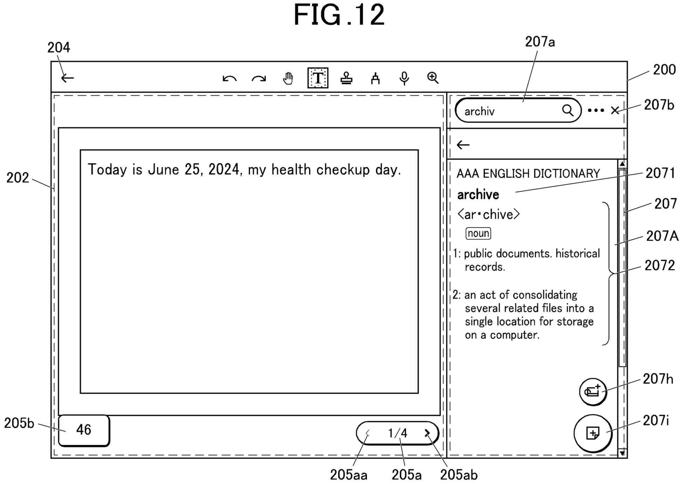

When the controller 11 receives a user operation via the operation unit 23 of the terminal device 20 for selecting one of the headwords in the list of headwords displayed in the list field 207c, the controller 11 acquires the explanatory information corresponding to the headword selected by the user from the dictionary content. Next, as illustrated in FIG. 12, the controller 11 causes the search screen 207A to display the headword 2071 selected by the user and the explanatory information 2072 corresponding to that headword. Furthermore, when the headword 2071 and the explanatory information 2072 are displayed on the search screen 207A illustrated in FIG. 12 and the controller 11 receives a click input from the user on the search end button 207b via the operation unit 23 of the terminal device 20, the controller 11 closes the search screen 207A and returns the edit screen 200 to the state illustrated in FIG. 9. Thereafter, when the controller 11 receives another click input from the user on the dictionary icon 206 on the edit screen 200 via the operation unit 23 of the terminal device 20, as illustrated in FIG. 12, the controller 11 allocates the portion of the edit screen 200 to the search region 207 and displays again, on the search screen 207A, the headword 2071 and the explanatory information 2072 that have been displayed before closing the search screen 207A. In other words, the controller 11 retains (does not reset) the content displayed on the search screen 207A until the edit screen 200 is closed.

Furthermore, when the search screen 207A is displayed on the edit screen 200 illustrated in FIGS. 10 to 12 and the controller 11 receives a click input from the user on the edit end button 204 via the operation unit 23 of the terminal device 20, the controller 11 stores the edited information on the edit screen 200 in the sticky note DB 124, and closes the edit screen 200 to transition the display to the notebook screen 100. Thereafter, when the controller 11 receives another click input from the user on the edit button 31 corresponding to the same sticky note on the notebook screen 100, the controller 11 causes the display 24 to display the edit screen 200 with the search screen 207A closed (see FIG. 9). Then, when the controller 11 receives a click input from the user on the dictionary icon 206 on the edit screen 200 via the operation unit 23 of the terminal device 20, the controller 11 displays the search screen 207A in the state illustrated in FIG. 10 within the edit screen 200. In other words, the controller 11 does not display, on the search screen 207A, the content that has been displayed before closing the edit screen 200. To put it another way, when closing the edit screen 200, the controller 11 does not retain (resets) the content that has been displayed on the search screen 207A before closing the edit screen 200.

Furthermore, when the search screen 207A is displayed on the edit screen 200 and the controller 11 receives a click input from the user on the previous sticky note button 205aa via the operation unit 23 of the terminal device 20, the controller 11 transitions the display to an edit screen for editing the previous sticky note in the sequence of connected sticky notes. On the edit screen for editing the previous sticky note, initially, the search screen is also closed, and the dictionary icon is displayed instead. Furthermore, when the search screen 207A is displayed on the edit screen 200 and the controller 11 receives a click input from the user on the next sticky note button 205ab via the operation unit 23 of the terminal device 20, the controller 11 transitions the display to an edit screen for editing the next sticky note in the sequence of connected sticky notes. On the edit screen for editing the next sticky note, initially, the search screen is also closed, and the dictionary icon is displayed instead. Then, when the controller 11 receives a click input from the user on the dictionary icon on the edit screen for editing the previous sticky note or the edit screen for editing the next sticky note via the operation unit 23 of the terminal device 20, the controller 11 displays the search screen 207A in the same state as illustrated in FIG. 10 within the edit screen. In other words, the controller 11 does not display (does not carry over) the content that has been displayed on the search screen 207A before transitioning the display to the edit screen for editing the previous or next sticky note. To put it another way, when transitioning the display to the edit screen for editing the previous or next sticky note, the controller 11 does not retain (resets) the content that has been displayed on the search screen 207A before the transition. Thus, when the previous sticky note button 205aa or the next sticky note button 205ab is clicked, the state of the displayed content in a dictionary search function undergoes a similar state transition to that when the edit screen is temporarily closed.

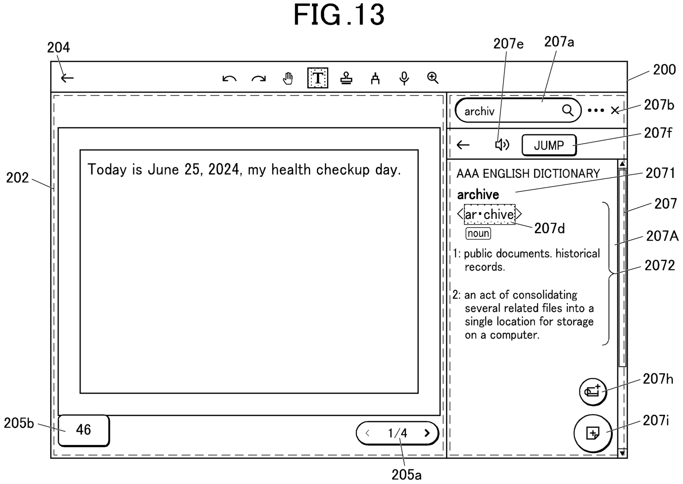

Furthermore, the controller 11 receives the user's selection of a certain character string in the text displayed on the search screen 207A via the operation unit 23 of the terminal device 20. For example, the user can select a character string by dragging the character string. FIG. 13 shows a selected character string 207d, which is the certain character string selected by the user. Next, the controller 11 displays an audio icon 207e and a jump icon 207f on the search screen 207A. The audio icon 207e is for reproducing the audio of the selected character string 207d. When the controller 11 receives a click input from the user on the audio icon 207e via the operation unit 23 of the terminal device 20 and audio data for the selected character string 207d exists in the dictionary content, the controller 11 acquires the audio data from the dictionary content and outputs the audio of the selected character string 207d from the audio output unit 26 of the terminal device 20.

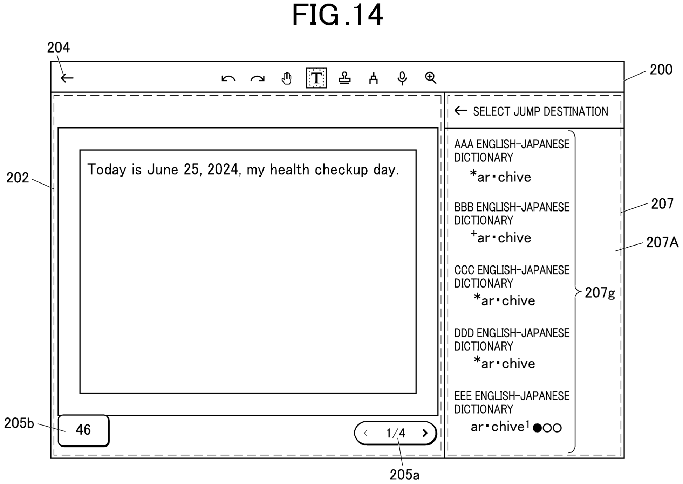

The jump icon 207f is for searching the dictionary content for the selected character string 207d. When the controller 11 receives a click input from the user on the jump icon 207f via the operation unit 23 of the terminal device 20, the controller 11 executes the search process to search for the headwords corresponding to the selected character string 207d in the dictionary content to be searched. Next, as illustrated in FIG. 14, the controller 11 displays the headwords acquired in the search process from the respective dictionaries in the dictionary content to be searched in a list field 207g on the search screen 207A, associating the headwords with the respective dictionary names. When the controller 11 receives a user operation via the operation unit 23 of the terminal device 20 for selecting one of the headwords in the list of headwords displayed in the list field 207g, the controller 11 acquires the explanatory information corresponding to the headword selected by the user from the dictionary content and displays the headword selected by the user and the explanatory information corresponding to that headword on the search screen 207A.

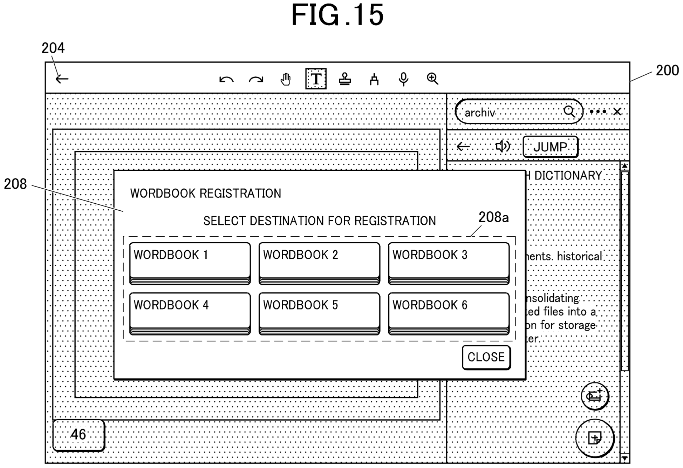

Furthermore, the search screen 207A, as illustrated in FIGS. 12 and 13, includes a word registration icon 207h. The word registration icon 207h is for registering the headword 2071 displayed on the search screen 207A in a wordbook. When the controller 11 receives a click input from the user on the word registration icon 207h via the operation unit 23 of the terminal device 20, the controller 11 displays a word registration screen 208 on the edit screen 200, as illustrated in FIG. 15. The word registration screen 208 includes a plurality of (here, six) wordbook buttons 208a corresponding to different wordbooks. Each of the wordbook buttons 208a is for specifying the wordbook to register the headword 2071 displayed on the search screen 207A. When the controller 11 receives a click input from the user on any of the wordbook buttons 208a via the operation unit 23 of the terminal device 20, the controller 11 registers the headword 2071 in the specified wordbook by storing, in the storage 12, data that associates the headword 2071 with information identifying the specified wordbook. Upon completion of the registration of the headword 2071 in the wordbook, the controller 11 displays a notification on the edit screen 200, for example by a snackbar, indicating that the registration of the headword 2071 in the wordbook is complete.

Furthermore, the search screen 207A, as illustrated in FIGS. 12 and 13, includes a sticky note creation icon 207i. The sticky note creation icon 207i is for creating a dictionary sticky note that shows the headword 2071 and the corresponding explanatory information 2072 for the headword 2071 displayed on the search screen 207A. When the controller 11 receives a click input from the user on the sticky note creation icon 207i via the operation unit 23 of the terminal device 20, the controller 11 creates a dictionary sticky note showing the headword 2071 and explanatory information 2072 displayed on the search screen 207A. The controller 11 then places the created dictionary sticky note on the notebook screen 100 on which the text sticky note (sticky note 101a) corresponding to the edit screen 200 is placed. Upon completion of the dictionary sticky note creation, the controller 11 displays a notification on the edit screen 200, for example by a snackbar, indicating that the dictionary sticky note creation is complete. Furthermore, when the number of sticky notes placed on the notebook screen 100 has already reached a predetermined maximum capacity at the time the click input on the sticky note creation icon 207i is received, the controller 11 does not create the dictionary sticky note and instead displays an error message, for example by a snackbar, indicating that the number of sticky notes placed on the notebook screen 100 has already reached the maximum capacity.

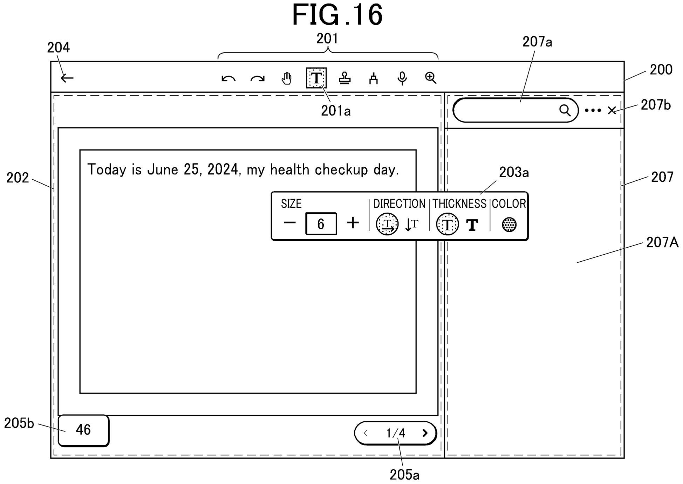

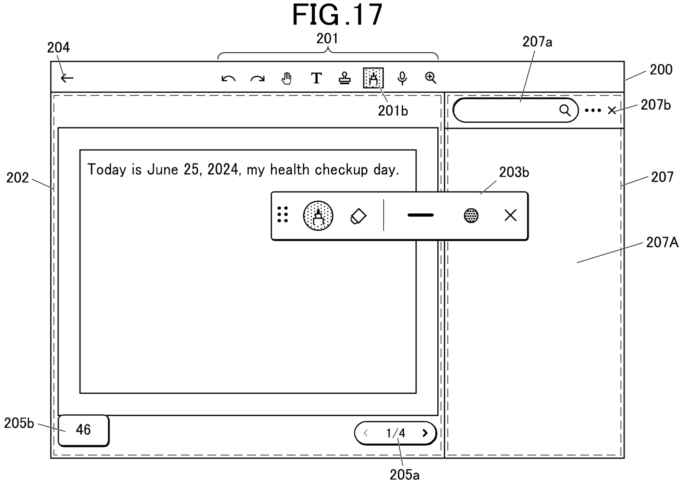

Furthermore, as illustrated in FIG. 16, on the edit screen 200 where the search screen 207A is displayed, the user can select an icon from the icon group 201 via the operation unit 23. The text input menu 203a that appears when the text input icon 201a is selected can be moved to any position within the editing region 202 and the search region 207. In other words, the user can position the text input menu 203a across both the editing region 202 and the search region 207 via the operation unit 23. Furthermore, as illustrated in FIG. 17, the icon group 201 includes a handwriting input icon 201b. The handwriting input icon 201b is for receiving an input of a handwritten object shown in a sticky note displayed in the editing region 202. When the controller 11 receives a click input from the user on the handwriting input icon 201b via the operation unit 23 of the terminal device 20, the controller 11 displays a handwriting input menu 203b on the edit screen 200 and receives setting operations from the user regarding handwriting input. Specifically, the controller 11 can receive setting operations in the handwriting input menu 203b for the line thickness, the line color, and the like of the handwritten object shown in the sticky note. When the controller 11 receives inputs of handwritten objects from the user via the operation unit 23 of the terminal device 20, the controller 11 begins showing the input handwritten objects in the sticky note displayed in the editing region 202 as the handwritten objects are input. Furthermore, the user can move the handwriting input menu 203b to any position within the editing region 202 and the search region 207 via the operation unit 23. In other words, like the text input menu 203a, the user can position the handwriting input menu 203b across both the editing region 202 and the search region 207 via the operation unit 23. As described above, the user can display a setting menu such as the text input menu 203a or the handwriting input menu 203b on the edit screen 200 where the search screen 207A is displayed, and edit the information shown in the sticky note in the editing region 202. Therefore, the user can edit the information shown in the sticky note while using the dictionary search function on the search screen 207A.

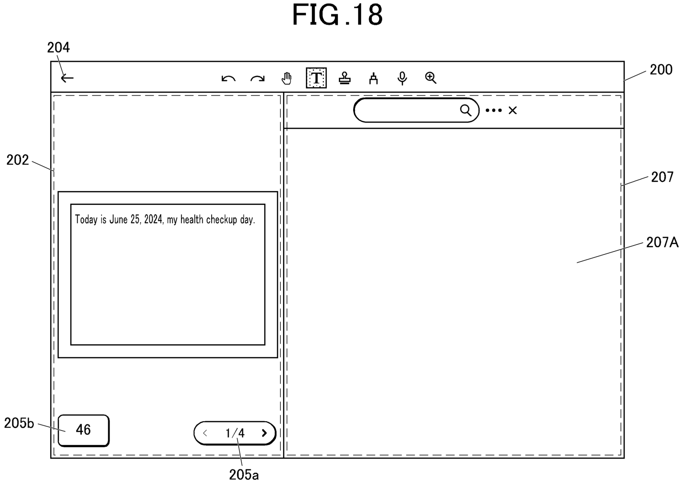

Furthermore, on the edit screen 200 where the search screen 207A is not displayed and the dictionary icon 206 is displayed in the editing region 202, the user can move the setting menu such as the text input menu 203a or the handwriting input menu 203b to any position within the editing region 202 via the operation unit 23. In this case, when the setting menu such as the text input menu 203a or the handwriting input menu 203b overlaps with the dictionary icon 206, the setting menu such as the text input menu 203a or the handwriting input menu 203b is displayed on top of the dictionary icon 206. Furthermore, as illustrated in FIG. 18, the user can expand the search region 207 on the edit screen 200 via the operation unit 23. In this case, the editing region 202 shrinks by the amount that the search region 207 expands. Moreover, as the editing region 202 shrinks, the editing target (e.g., characters) within this editing region 202 also shrinks, as illustrated in FIG. 18. In the present embodiment, the search region 207 can be expanded to the left end of the edit screen 200. When the search region 207 is expanded to the left end of the edit screen 200, the editing region 202 is not displayed on the edit screen 200.

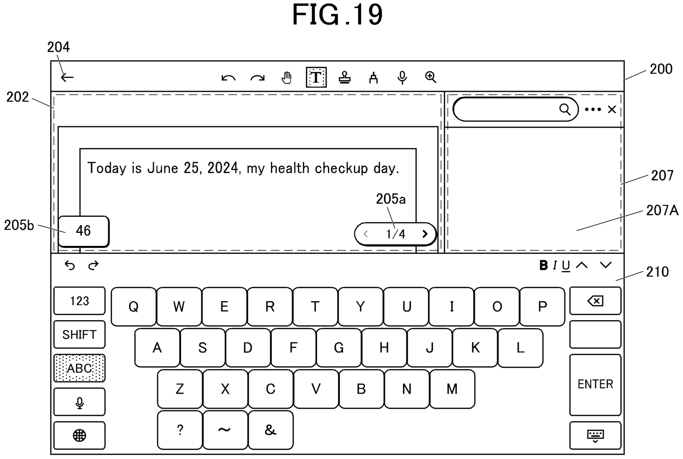

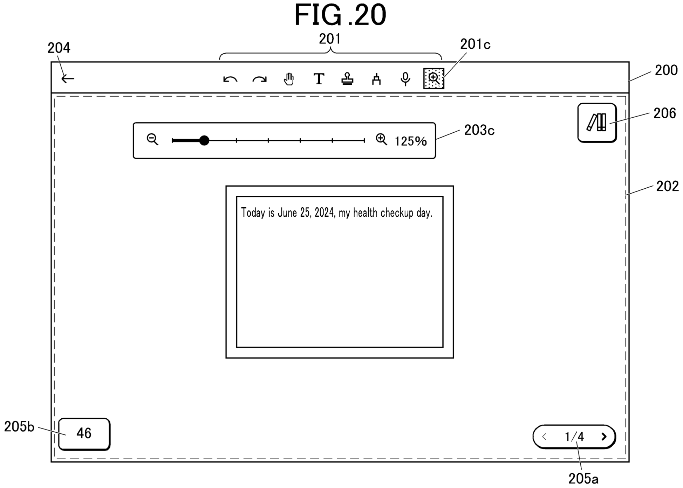

Furthermore, as illustrated in FIG. 19, the controller 11 may display a software keyboard 210 as the operation unit 23 on the edit screen 200. In this case, the controller 11 displays the pager 205a and character count indicator 205b at the bottom edge of the editing region 202 on the edit screen 200 without overlapping the pager 205a and character count indicator 205b with the search region 207. Furthermore, as illustrated in FIG. 20, the icon group 201 includes a zoom icon 201c. The zoom icon 201c is for displaying sticky notes displayed on the edit screen 200 in a reduced or enlarged size. When the controller 11 receives a click input from the user on the zoom icon 201c via the operation unit 23 of the terminal device 20, the controller 11 displays a zoom menu 203c on the edit screen 200 and receives setting operations from the user regarding the zoom display of sticky notes. The controller 11 displays a sticky note in a reduced or enlarged size on the edit screen 200 in response to a user operation on the zoom menu 203c. FIG. 20 illustrates an example of displaying a sticky note in a reduced size on the edit screen 200. The pager 205a, character count indicator 205b, and dictionary icon 206 displayed in the editing region 202 on the edit screen 200 are floating icons. Therefore, the controller 11 does not change the positions of the pager 205a, character count indicator 205b, and dictionary icon 206 in the editing region 202 even when the sticky note is displayed in a reduced or enlarged size.

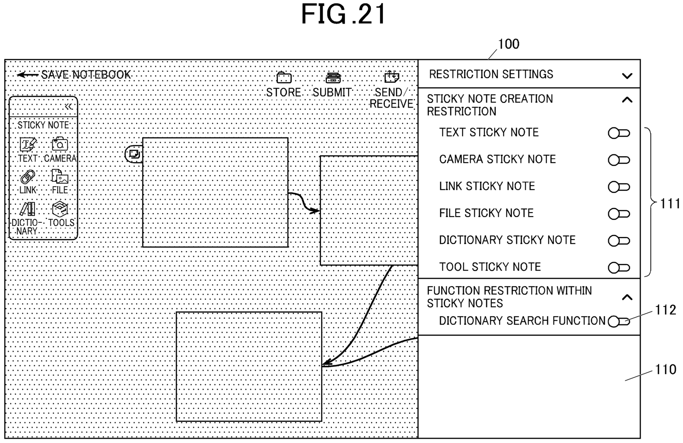

Furthermore, the learning support system 1 can be used in an educational institution to which learners and instructors who teach learners belong. In the learning support system 1, the instructors are assigned instructor accounts, and the learners are assigned learner accounts. In the learning support system 1, it is possible to configure settings that restrict the following processes on the notebook screen 100 in the learner accounts in response to a user operation in the instructor accounts. Specifically, when the logged-in account for the learning support service is an instructor account, as illustrated in FIG. 21, the controller 11 displays a restriction setting screen 110 on the notebook screen 100 in response to a predetermined user operation on the notebook screen 100 via the operation unit 23 of the terminal device 20. On the restriction setting screen 110, in response to user operations in the instructor account, the controller 11 receives settings for each notebook in the learner accounts to restrict the creation of sticky notes and to restrict the functions within sticky notes. Furthermore, on the restriction setting screen 110, it is possible to independently set the settings to restrict the creation of sticky notes and the settings to restrict the functions within sticky notes.

As illustrated in FIG. 21, the restriction setting screen 110 includes sticky note creation restriction buttons 111 for enabling or disabling the sticky note creation for the respective types of sticky notes, and a dictionary search function restriction button 112 for enabling or disabling the dictionary search function within text sticky notes. In response to a click input by the user on one of the sticky note creation restriction buttons 111 via the operation unit 23 of the terminal device 20, the controller 11 enables or disables the sticky note creation for the sticky note type corresponding to the clicked sticky note creation restriction button 111. Furthermore, in response to a click input by the user on the dictionary search function restriction button 112 via the operation unit 23 of the terminal device 20, the controller 11 enables or disables the dictionary search function within text sticky notes. In other words, in response to a click input on the dictionary search function restriction button 112, the controller 11 receives a dictionary search setting operation for enabling or disabling the instruction for the search process via the dictionary icon 206 on the edit screen 200. As described above, the controller 11 sets whether to display the search screen 207A in response to a user operation on the icon (dictionary icon 206) in the learner accounts, as configured by the instructor account. The controller 11 functions as a setting unit.

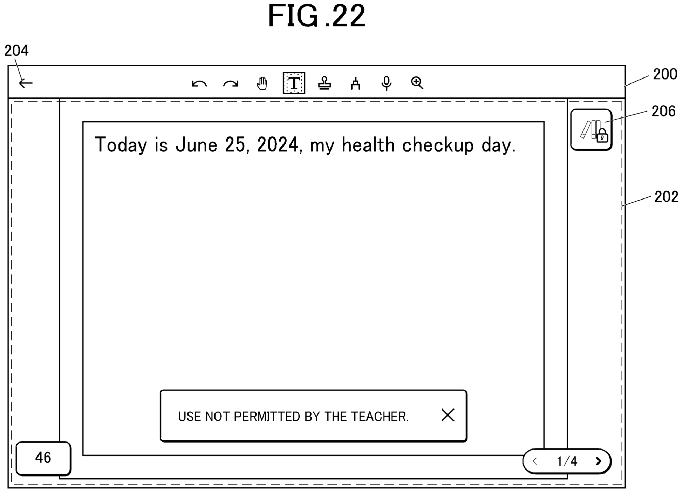

When the instruction for the search process via the dictionary icon 206 is set to be disabled, the controller 11 displays the dictionary icon 206 on the edit screen 200 in a display mode indicating that the instruction for the search process is set to be disabled, as illustrated in FIG. 22. In this case, when the controller 11 receives a click input on the dictionary icon 206 in a learner account, the controller 11 displays a message, on the edit screen 200 by a snackbar, indicating that the instruction for the search process is disabled (in the example illustrated in FIG. 22, "Use not permitted by the teacher"). Even when the instruction for the search process via the dictionary icon 206 is set to be disabled, the search process for a character string entered in the input field 241c on the menu screen 241 remains enabled. Furthermore, the controller 11 may receive setting operations for the dictionary content to be searched in the search process instructed via the dictionary icon 206. For example, the controller 11 receives the setting operations for the dictionary content to be searched in response to user operations in an instructor account. In this case, in the dictionary content to be searched, which is set in response to the user operations in the instructor account, the controller 11 executes the search process to search for the headwords corresponding to a character string entered in the input field 207a on the search screen 207A. This enables, when the dictionary content to be used for the search process is specified on a school basis, searching for a certain character string using only the dictionary content specified by the school.

As described above, the learning support system 1 according to the present embodiment is a learning support system capable of arranging and displaying a plurality of electronic sticky notes. The learning support system 1 includes the controller 11 that displays an icon (dictionary icon 206) on the edit screen 200 for editing the content shown in an electronic sticky note selected from the plurality of electronic sticky notes. This icon is for displaying the search screen 207A for searching for a certain character string in predetermined dictionary content. When displaying the search screen 207A in response to a user operation on the icon, the controller 11 allocates a portion of the edit screen 200 as a region (search region 207) for displaying the search screen 207A. Therefore, the user can edit information shown in the sticky note while using the dictionary search function on the search screen 207A. This enhances the convenience of the dictionary search function during the editing of the electronic sticky note.

Furthermore, the learning support system 1 according to the present embodiment is configured with learner accounts assigned to learners and instructor accounts assigned to instructors who teach the learners. The learning support system 1 includes a setting unit (controller 11) that can set whether to display the search screen 207A in response to a user operation on the icon (dictionary icon 206) in the learner accounts, as configured by one of the instructor accounts. This allows each instructor to set whether the learners can use the dictionary search function on the edit screen 200.

Furthermore, in the learning support system 1 according to the present embodiment, the controller 11 displays, on the search screen 207A, the results of searching in the predetermined dictionary content for a character string entered on the search screen 207A. This allows the user to edit the information shown in the sticky note while viewing the search results for the certain character string on the search screen 207A.

That is, according to the present embodiment, the interaction process between the user and the machine can reliably assist the user in performing a technical task. Here, the technical task performed by the user is to search for a certain character string in predetermined dictionary content while editing an electronic sticky note.

In the above description, an example has been disclosed in which the storage 12 and the storage 22 (HDD and/or SSD) are used as a computer-readable medium storing the program according to the present disclosure. This is not intended to limit the present invention. The computer-readable medium may be a portable recording/storage medium, such as a flash memory or a CD-ROM. Furthermore, a carrier wave can be used as a medium to provide data of the program according to the present disclosure via a communication line. The description in the above embodiment is an example of the learning support system, learning support method, and program according to the present disclosure. This is not intended to limit the present invention. For example, in the above embodiment, a case has been illustrated where the controller 11 of the server 10 functions as the "controller" and "setting unit," but the controller 21 of the terminal device 20 may also function as the "controller" and "setting unit."

The embodiments of the present disclosure have been described, but the scope of the present disclosure is not limited to the above embodiments and includes the scope of the disclosure described in the claims and the scope of equivalents thereof.

## Claims

1. A learning support system (1) capable of arranging and displaying a plurality of electronic sticky notes (101a to 101d), **characterized in that** the learning support system (1) comprises
a control means (11, 21) that:
in response to an electronic sticky note being selected from the plurality of electronic sticky notes (101a to 101d), displays on a display (24) an edit screen (200) for editing content shown in the selected electronic sticky note; and,
in response to a user operation on a predetermined icon (206), allocates a portion of the edit screen (200) as a region (207) for displaying a search screen (207A) for searching for a certain character string in predetermined dictionary content to display the search screen (207A), wherein
the predetermined icon (206) is displayed at a predetermined position on the edit screen (200) as an indicator showing that searching for the certain character string in the predetermined dictionary content is possible.

2. The learning support system (1) according to claim 1, wherein
the learning support system (1) is configured with a learner account assigned to a learner and an instructor account assigned to an instructor who teaches the learner, and
whether to display the search screen (207A) in response to the user operation on the predetermined icon (206) in the learner account is configurable by the instructor account.

3. The learning support system (1) according to claim 1, wherein the control means (11, 21) displays on the search screen (207A) a result of searching for the certain character string in the predetermined dictionary content, the certain character string being a character string entered on the search screen (207A).

4. The learning support system (1) according to claim 1, wherein the control means (11, 21) allocates the portion of the edit screen (200) as the region (207) for displaying the search screen (207A) such that the region (207) for displaying the search screen (207A) is arranged side-by-side in a left-right direction with respect to a region (202) for displaying an editing target.

5. The learning support system (1) according to claim 4, wherein the control means (11, 21) allocates the portion of the edit screen (200) as the region (207) for displaying the search screen (207A) such that an area of the region (202) for displaying the editing target is larger than an area of the region (207) for displaying the search screen (207A).

6. The learning support system (1) according to claim 4, wherein the predetermined icon (206) is displayed at an end in the left-right direction on a same side as the region (207) for displaying the search screen (207A).

7. A learning support method executed by a learning support system (1) capable of arranging and displaying a plurality of electronic sticky notes (101a to 101d), **characterized in that** the method comprises:
in response to an electronic sticky note being selected from the plurality of electronic sticky notes (101a to 101d), displaying on a display (24) an edit screen (200) for editing content shown in the selected electronic sticky note; and,
in response to a user operation on a predetermined icon (206), allocating a portion of the edit screen (200) as a region (207) for displaying a search screen (207A) for searching for a certain character string in predetermined dictionary content to display the search screen (207A), wherein
the predetermined icon (206) is displayed at a predetermined position on the edit screen (200) as an indicator showing that searching for the certain character string in the predetermined dictionary content is possible.

8. A program readable by a computer (11, 21) of a learning support system (1) capable of arranging and displaying a plurality of electronic sticky notes (101a to 101d), **characterized in that** the program causes the computer (11, 21) to:
in response to an electronic sticky note being selected from the plurality of electronic sticky notes (101a to 101d), display on a display (24) an edit screen (200) for editing content shown in the selected electronic sticky note; and,
in response to a user operation on a predetermined icon (206), allocate a portion of the edit screen (200) as a region (207) for displaying a search screen (207A) for searching for a certain character string in predetermined dictionary content to display the search screen (207A), wherein
the predetermined icon (206) is displayed at a predetermined position on the edit screen (200) as an indicator showing that searching for the certain character string in the predetermined dictionary content is possible.
